Europäisches Patentamt

European Patent Office

Office européen des brevets

(19)

(11) Publication number: **0 172 564**
**A2**

# (12) EUROPEAN PATENT APPLICATION

(21) Application number: **85110453.9**

(22) Date of filing: **20.08.85**

(51) Int. Cl.⁴: **A 63 B 59/00**

(30) Priority: **21.08.84 ZW 13784**
**11.01.85 ZW 785**

(43) Date of publication of application:
**26.02.86 Bulletin 86/9**

(84) Designated Contracting States:
**AT BE CH DE FR GB IT LI LU NL SE**

(71) Applicant: **LOXTON MANUFACTURERS (PVT) LTD**
**15 Bessborough Street Light Industrial Sites**
**Belmont Bulawayo(ZW)**

(72) Inventor: **Parsons, Frank**
**11 Bunting Close**
**Burnside Bulawayo(ZW)**

(74) Representative: **May, Hans Ulrich, Dr.**
**Thierschstrasse 27**
**D-8000 München 22(DE)**

(54) Sporting equipment, such as hockey sticks, cricket bats and the like, and method of manufacturing such items.

(57) This invention relates to items of sporting equipment such as hockey sticks, bats, clubs, mallets and the like and a method of manufacturing an article of sporting equipment such as a bat, club, mallet, hockey stick or the like is disclosed. The method comprises the steps of forming a core (102) which may be of wood or of synthetic fibres, roughly in the shape of the article and encapsulating the core in a plastics material in a mould.

FIG.4.

EP 0 172 564 A2

- 1 -

## BACKGROUND TO THE INVENTION

This invention relates to items of sporting equipment and to hockey sticks, bats, clubs, mallets and the like.

The above mentioned items of sporting equipment have traditionally been made from wood and, since each such item is intended to be impact resistant, special woods and special methods of construction have had to be used in order to ensure that the particular item of sporting equipment is suitable for the intended purpose.

It is an object of this invention to provide a method of manufacturing such items of sporting equipment which is more mechanised, and therefore less expensive, but nevertheless produces a high quality item of sporting equipment.

## SUMMARY OF THE INVENTION

According to the invention a method of manufacturing an article of sporting equipment such as a bat, club, mallet, hockey stick or the like comprises the steps of forming a core roughly in the shape of the article and encapsulating the core in a plastics material in a mould.

The core may be of wood or a suitable reinforcing material such as glass, plastics or carbon fibre.

The core may be coated with a suitable coating adapted to serve as a moisture barrier, particularly where a wooden core is used. A number of varnishes are available which would provide suitable coatings.

The method may include the additional step of reinforcing a striking head of the article by the insertion therein of one or more laminae of an additional reinforcing material. With a wooden core one or more sheets or strips of glass , plastics or carbon fibre, or fibre tape may be used. In a preferred form of the invention, the lamination is done in a series of parallel planes, the plane of lamination being normal to the expected bending plane of the article or head in use.

The method, in the preferred form of the invention, includes the steps of finishing the article by shaping the article mechanically or manually to its final shape and providing the article with a suitable grip or grips.

The article may be painted.

The invention extends to an article of sporting equipment such as a club, mallet, bat, hockey stick or the like comprising a core encapsulated in a plastics material.

For the wooden core a relatively inexpensive timber such as saligna (Eucalyptus saligna) timber may be used and the encapsulating material may be a suitable polyurethane resin.

In one form of the invention the item of sporting equipment is a hockey stick.

In another form of the invention the item of sporting equipment is a cricket bat.

BRIEF DESCRIPTION OF THE DRAWINGS

The invention will be further described with reference to the accompanying drawings in which:

Figure 1 is a plan view of a hockey stick manufactured in accordance with the method of the invention;

Figure 2 is a section on line 2-2 in Figure 1;

Figure 3 is a section on line 3-3 in Figure 1; and

Figure 4 is a diagramatic plan view of a cricket bat manufactured in accordance with the method of the invention;

DESCRIPTION OF AN EMBODIMENT OF THE INVENTION

The invention will be described with reference to a hockey stick and a cricket bat, but it will be appreciated that the invention may find application wider than these examples particularly in the sporting goods field and even outside the sporting goods field.

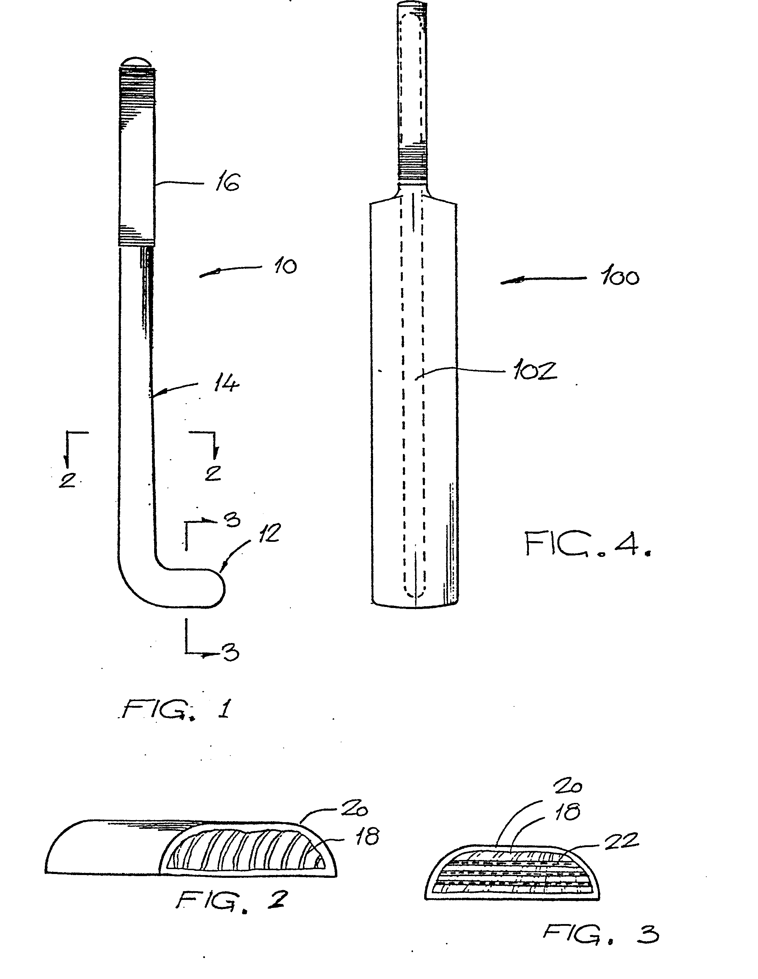

In Figures 1 to 3 a hockey stick 10 comprises a crook or head portion 12, a body portion 14 and a grip portion 16.

As can be seen from Figures 2 and 3, the hockey stick comprises a timber core 18 which is encapsulated in a plastics material 20.

The head or crook portion 12 of the hockey stick is reinforced by having a plurality of glass fibre sheets 22 laminated in splits or sawn slits formed in the timber 18 of the head.

To manufacture the hockey stick 10, a solid timber core is formed roughly in the shape of the hockey stick, but the size thereof is smaller than the completed hockey stick, the size differential determining the thickness of the plastics layer 20. The timber core 18 is then varnished with a suitable varnish to stop moisture seeping from the timber into the plastics material and the head 12 of the hockey stick is laminated with glass fibre tape 22 which is inserted into slits pre-sawn in the head 12.

The core or insert 18 is then placed in a mould and a plastics material is injected into the mould whereby the core 18 is totally encapsulated in plastics.

After moulding the resulting rough hockey stick is hand fettled or shaped whereafter the outside is varnished and one half thereof is painted white for aesthetic purposes.

The handle is then bound with a cloth tape and a towelling material grip is provided for the grip portion 16. As a final cosmetic dressing, a rubber ferrule is fitted on the top of the hockey stick.

As has been mentioned above, the encapsulating material presently preferred by the applicants is a polyurethane resin while the timber presently preferred for the core 18 is Eucalyptus saligna which is relatively inexpensive and easy to work.

In the cricket bat 100 shown in Figure 4, the core 102 is substantially smaller than the finished product. To achieve proper reinforcement the core may require flexural characteristics exceeding those of timber and synthetic fibres such as glass, plastics or carbon fibres may be used to form the core.

0172564

## Claims

1. A method of manufacturing an article of sporting equipment such as a bat, club, mallet, hockey stick or the like comprising the steps of forming a core (18, 102) roughly in the shape of the article and encapsulating the core in a plastics material (20) in a mould.

2. A method according to claim 1 in which the core is coated with a suitable coating and/or varnish to serve as a barrier between the core and the plastics material.

3. A method according to any one of the preceding claims which includes the step of reinforcing a striking head of the article by the insertion in the core of the head portion (12), of one or more laminae (22) of a reinforcing material.

4. A method according to claim 4 in which the reinforcing material comprises a fibre compatible with the core material.

5. A method according to either of claims 4 or 5 in which the lamination is done in a series of parallel planes, the plane of lamination being normal to the expected bending plane of the article or head in use.

6. A method according to any one of the preceding claims including the step of finishing the article by shaping, mechanically or manually, the article to its final shape, and optionally painting the article.

7. An article of sporting equipment such as a club, mallet, bat, cricket bat, hockey stick or the like comprising a core (18, 102) encapsulated in a plastics material (20).

8. An article according to claim 7 in which the core (18, 102) is of wood or of a synthetic reinforcing material such as glass, plastics or carbon fibres.

9. An article according to any one of claims 7 or 8 in which the plastics (20) material is a suitable polyurethane resin.

10. An article according to any one of claims 7 to 9 in which the core is reinforced by one or more laminae (22) of an additional reinforcing material.

0172564

FIG. 1

FIG. 4.

FIG. 2

FIG. 3